# FASCICULE DE BREVET EUROPEEN

(11) **EP 1 085 276 B1**
(45) Date de publication et mention de la délivrance du brevet: **01.03.2006**
(21) Numéro de dépôt: 00402557.3
(22) Date de dépôt: 15.09.2000
(51) Int. Cl.: F24H 9/14, F24D 3/16, F28F 9/26, F28D 1/053

(54) **Dispositif de raccordement en série d'au moins deux panneaux de chauffage à rayonnement à circulation d'un fluide caloporteur**
Vorrichtung zum in Serie Verbinden von mindenstens zwei Strahlungsheizpaneelen mit einer Wärmeträgerumwalzungsanlage
Device for connecting in series at least two radiating heating panels to a heat transfer fluid circuit

(30) Priorité: 20.09.1999 FR 9911739
(43) Date de publication de la demande: 21.03.2001
(73) Titulaire: ZEHNDER GROUP SERVICES, 91004 Evry (FR)
(72) Inventeur: Noga, Patrick, 02110 Bohain (FR)
(74) Mandataire: Thinat, Michel

(56) Documents cités:
- GB-A- 1 578 629
- GB-A- 2 072 316
- NL-A- 7 905 186
- US-A- 4 424 656

## Description

La présente invention concerne un système comprenant au moins deux panneaux de chauffage par rayonnement à circulation d'un fluide caloporteur, tel que de l'eau chaude, et un dispositif de raccordement en série des deux panneaux de chauffage.

L'utilisation de panneaux rayonnants alimentés en eau chaude pour le chauffage de locaux est connue depuis de nombreuses années. Ces panneaux sont montés au plafond du local à chauffer et émettent un rayonnement électromagnétique dans l'infrarouge invisible qui se transforme en énergie calorifique au contact des surfaces du local et des objets de masses importantes présents dans le local, tels que par exemple des meubles ou des machines.

Chaque panneau de chauffage comprend plusieurs tubes plats parallèles dans un même plan permettant d'émettre le rayonnement électromagnétique et deux collecteurs cylindriques fixés, par soudage, respectivement aux extrémités opposées des tubes plats en arrière de ceux-ci. Les deux collecteurs cylindriques s'étendent transversalement aux tubes plats et sont en communication de fluide avec ces derniers par des perçages réalisés dans la zone de contact entre collecteurs et tubes plats de façon à assurer une circulation du fluide caloporteur dans le panneau suivant une direction prédéterminée. Par exemple, l'alimentation en eau chaude peut s'effectuer de telle façon que l'entrée d'eau chaude s'effectue à l'extrémité de l'un des collecteurs transversaux du panneau et la sortie de celle-ci s'effectue à l'extrémité de l'autre collecteur, située du même côté.

Plusieurs panneaux peuvent être liés entre eux en série par l'intermédiaire de plaques d'alignement comportant chacune deux trous carrés permettant le montage de la plaque respectivement sur deux manchons de section carrée solidaires respectivement de deux collecteurs adjacents de deux panneaux à relier en série. La communication de fluide entre deux panneaux successifs s'effectue par des raccords flexibles qui sont de préférence croisés afin que les panneaux soient rapprochés l'un de l'autre.

Ce dispositif de raccordement connu de panneaux a pour inconvénient majeur d'occasionner des pertes de charge et, par conséquent, de limiter le raccordement à trois panneaux en série au maximum. En outre, ce dispositif connu nécessite de prévoir autant de purgeurs qu'il y a de flexibles de raccordement et les purgeurs sont inaccessibles en position de montage des panneaux au plafond puisque situés en arrière de ceux-ci. Par ailleurs, la mise en place des plaques d'alignement des panneaux n'est pas toujours aisée du fait de la section carrée des manchons.

GB 1 578 629 décrit une unité de chauffage par convection et rayonnement à au moins deux éléments de bancs de tubes adjacents dont des collecteurs peuvent être deux. à deux interconnectés en alignement par un manchon de raccordement à double filetage externe de pas opposés pouvant être vissés respectivement dans les extrémités des deux collecteurs. Cette unité connue a pour inconvénient de nécessiter le passage d'un outil au travers de l'un des collecteurs pour l'introduire dans un perçage polygonal du manchon afin de visser ce dernier dans les deux collecteurs alignés.

GB-A-2 072 316 décrit un échangeur de chaleur à plusieurs tubes plats parallèles et reliés à leurs extrémités opposées par des conduites d'entrée et de sortie de fluide. Les conduits sont reliés en communication de fluide par des soudures. Ce document antérieur s'adresse au problème d'améliorer l'utilisation de l'énergie, d'économiser cette énergie et de mieux dissiper la chaleur d'un tel échangeur en prévoyant, pour chaque tube plat, un rapport de la section interne à la longueur circonférentielle externe du tube qui soit inférieur ou égal à 2,5 mm. Ce document ne s'adresse donc pas au problème de liaison en série d'au moins deux panneaux de chauffage.

La présente invention a pour but d'éliminer les inconvénients ci-dessus des dispositifs connus en proposant un système comprenant les caractéristiques énoncées dans la revendication 1.

De préférence, le système comprend deux organes formant agrafe de liaison s'étendant parallèlement aux tubes plats et situés symétriquement au plan médian longitudinal des panneaux raccordés.

De préférence, chaque manchon de raccordement comprend une partie d'extrémité filetée extérieurement permettant de solidariser le manchon par vissage dans un trou taraudé réalisé dans l'une des extrémités d'un collecteur longitudinal d'une paire de collecteurs longitudinaux à raccorder et une partie opposée pouvant s'engager librement dans l'extrémité de l'autre collecteur longitudinal de ladite paire de collecteurs longitudinaux, la partie opposée du manchon de raccordement étant maintenue dans l'extrémité de l'autre collecteur longitudinal par la force de rappel l'un vers l'autre des deux collecteurs transversaux exercée par chaque organe formant agrafe de liaison.

Chacune des extrémités en vis-à-vis des deux collecteurs longitudinaux à raccorder comprend une douille interne fixe comportant un alésage d'entrée pouvant recevoir la partie du manchon opposée à sa partie filetée et un trou taraudé en prolongement de l'alésage d'entrée et dans lequel peut être vissée la partie filetée du manchon de raccordement.

Le manchon de raccordement comprend une collerette de forme héxagonale située entre les deux extrémités des deux collecteurs longitudinaux correspondants raccordés et faisant saillie à l'extérieur de façon à être manoeuvrables par un outil, tel qu'une clef plate, pour régler l'alignement des collecteurs longitudinaux.

Le manchon de raccordement comprend en outre des gorges de réception de joints toriques d'étanchéité au fluide.

Chaque manchon de raccordement est percé axialement pour le passage du fluide caloporteur à travers la paire correspondante de collecteurs longitudinaux raccordés.

Les collecteurs longitudinaux des panneaux sont fixés aux collecteurs transversaux par soudage et la communication de fluide entre les collecteurs longitudinaux et transversaux s'effectue par des perçages réalisés dans les zones de contact entre ces collecteurs.

La communication de fluide entre les collecteurs transversaux et les tubes plats s'effectue par des perçages réalisés dans les zones de contact entre collecteurs et tubes plate.

Chaque panneau comprend des pattes solidaires des tubes plats et permettant la fixation du panneau au plafond d'un local par l'intermédiaire de chaînes et de ridoirs à double crochet fixés aux pattes de fixation.

L'invention vise également un panneau de chauffage par rayonnement à circulation d'un fluide caloporteur, tel que de l'eau chaude, du type comprenant des tubes plats parallèles rayonnants situés dans un même plan et deux collecteurs cylindriques fixés en arrière des tubes plats respectivement aux extrémités opposées des tubes plats transversalement à ceux-ci en étant en communication de fluide avec les tubes plats pour assurer la circulation du fluide caloporteur et qui est caractérisé en ce qu'il comprend deux autres collecteurs cylindriques longitudinaux s'étendant parallèlement aux tubes plats et qui sont fixés sur les deux collecteurs transversaux en étant en communication de fluide avec ces derniers pour assurer la circulation du fluide caloporteur de façon prédéterminée, chacun des collecteurs longitudinaux comprenant à au moins l'une de ses extrémités une douille interne solidaire de cette extrémité et adaptée pour recevoir dans son alésage d'entrée un manchon de raccordement du dispositif de raccordement.

Les collecteurs longitudinaux sont fixés aux collecteurs transversaux par soudage et communiquent ensemble par des perçages réalisés dans les zones de contact entre collecteurs.

Les collecteurs transversaux sont fixés aux tubes plats par soudage et communiquent avec ces derniers par des perçages réalisés dans les zones de contact entre collecteurs et tubes plats.

Le panneau comprend des pattes solidaires des tubes plats et permettant la fixation du panneau au plafond d'un local par l'intermédiaire de chaînes et de ridoirs à double crochet fixés aux pattes de fixation.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention, et dans lesquels :
La figure 1 est une vue en perspective de la partie arrière d'un panneau rayonnant à circulation d'eau chaude raccordé individuellement, conforme à l'invention.
La figure 2 est une vue partielle en perspective représentant le raccordement en série de deux panneaux rayonnants selon l'invention.
La figure 3 est une vue en coupe suivant la ligne III-III de la figure 2.
La figure 4 est une vue en bout en perspective montrant le montage au plafond d'un local de trois panneaux rayonnants raccordés les uns aux autres en série.
la figure 5 est une vue schématique de dessus représentant un exemple de circulation d'eau chaude dans trois panneaux rayonnants reliés en série.

En se reportant aux figures, la référence 1 désigne un panneau rayonnant alimenté en eau chaude, étant bien entendu qu'il peut être alimenté en tout autre fluide caloporteur.

Le panneau 1 comprend un certain nombre de tubes plats parallèles 2 permettant d'émettre par leur face avant le rayonnement électromagnétique dans l'infrarouge invisible qui se transforme en énergie calorifique au contact des surfaces du local à chauffer et des masses dans celui-ci.

Le panneau 1 comprend également deux collecteurs cylindriques 3 fermés à chacune de leurs extrémités et fixés par soudage respectivement aux extrémités opposées des tubes plats 2 en s'étendant transversalement à ceux-ci. Les deux collecteurs 3 sont fixés en arrière des tubes plats 2 de façon à les maintenir parallèlement les uns aux autres dans un même plan et sont en communication de fluide avec les tubes plats 2 pour assurer une irrigation du panneau de façon prédéterminée. La communication de fluide entre chaque collecteur 3 et les tubes plats correspondants 2 s'effectue par des perçages 3a, 2a réalisés dans les zones de contact entre le collecteur 3 et les tubes plats 2.

Selon l'invention, chaque panneau 1 comprend deux autres collecteurs cylindriques 4 s'étendant parallèlement aux tubes plats 2, fixés sur les deux collecteurs transversaux 3 et pouvant être en communication de fluide avec ces derniers pour assurer la circulation du fluide caloporteur de la façon prédéterminée. Les deux collecteurs longitudinaux 4 sont fixés par soudage sur les collecteurs transversaux 3 et sont en communication de fluide avec les collecteurs 3 par l'intermédiaire de perçages 4a, 3b réalisés dans les zones de contact entre collecteurs 4, 3.

La structure d'assemblage entre collecteurs transversaux 3 et longitudinaux 4 ci-dessus décrite permet de mieux rigidifier le panneau rayonnant 1 par rapport aux panneaux rayonnants connus.

Chaque panneau 1 comprend en outre des pattes 5, dans le cas présent au nombre de quatre, solidaires des tubes plats correspondants 2 à leur face arrière et comportant des perçages 5a permettant le passage d'éléments d'accrochage du panneau au plafond d'un local comme on le verra ultérieurement.

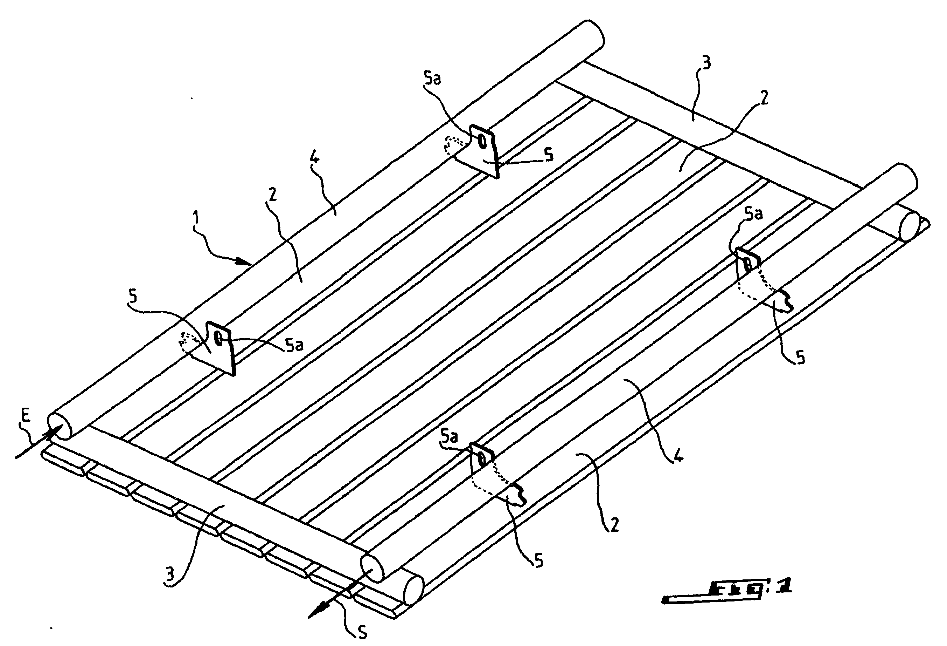

Chaque panneau 1 peut être utilisé individuellement et la circulation du fluide caloporteur dans celui-ci peut être telle que l'eau chaude entre d'un côté du panneau 1 et, après avoir irrigué le panneau, sort du même côté. Dans ce cas, en référence à la figure 1, l'entrée de l'eau chaude s'effectuera comme indiqué par la flèche E à l'extrémité gauche de l'un des collecteurs longitudinaux 4, dont l'autre extrémité est bouchée, pour irriguer le panneau 1 par passage de l'eau chaude dans le collecteur transversal 3 de gauche qui communique avec l'extrémité d'entrée du collecteur 4 et avec les tubes plats 2 par les perçages correspondants 4a, 3b, 3a, 2a et la sortie de l'eau chaude s'effectuera à l'extrémité gauche, comme indiqué par la flèche S, de l'autre collecteur longitudinal 4, dont l'extrémité opposée est fermée, et qui communique avec l'autre collecteur transversal 3 par les perçages correspondants 4a et 3b, le collecteur 3 communiquant bien entendu avec les tubes plats 2 par les perçages 3a, 2a. La circulation de l'eau chaude dans chaque panneau peut s'effectuer également de telle façon que l'entrée d'eau chaude s'effectue à l'une des extrémités d'un collecteur longitudinal 4 et la sortie de celle-ci s'effectue à l'extrémité opposée de l'autre collecteur longitudinal 4.

La construction de chaque panneau rayonnant de l'invention est telle que les pertes de charge provoquées pendant la circulation d'eau chaude sont négligeables.

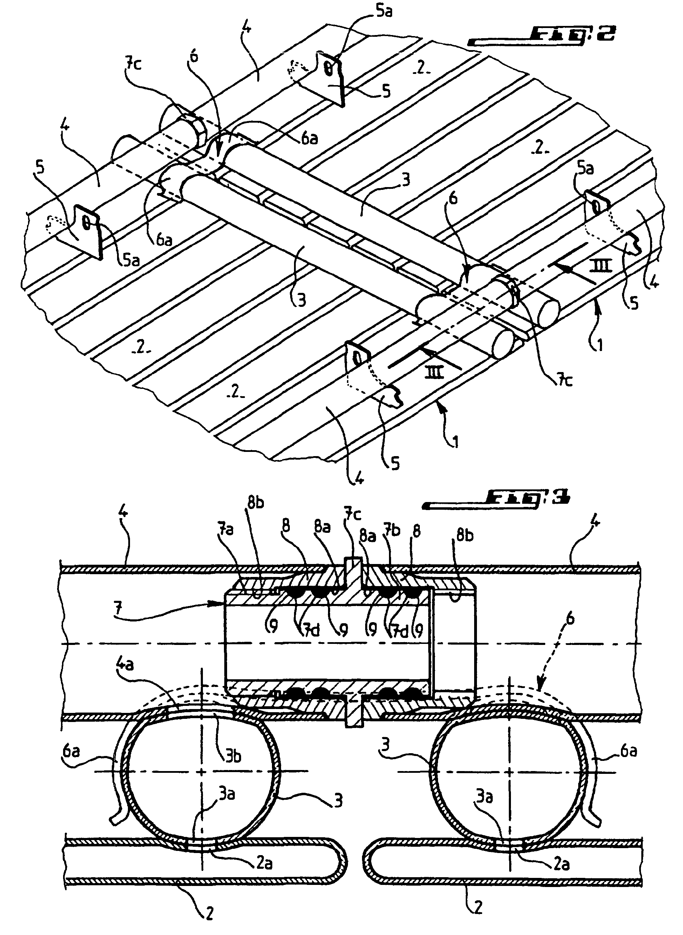

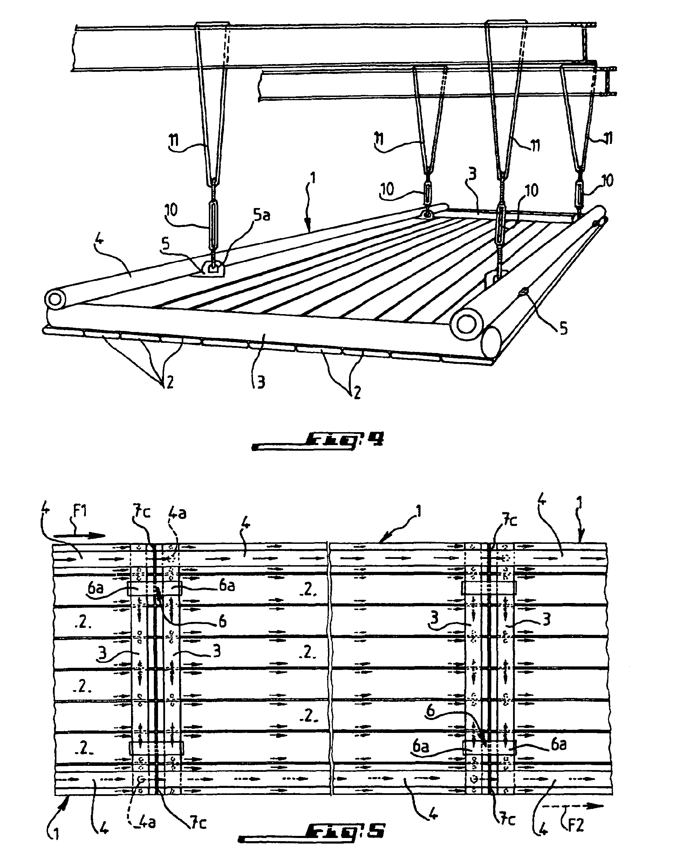

Plusieurs panneaux rayonnants 1 peuvent être raccordés les uns aux autres en série par un dispositif de raccordement qui va être décrit en se référant notamment aux figures 2 et 3.

Ce dispositif comprend au moins un organe 6 formant agrafe de liaison par accrochage des deux collecteurs transversaux extrêmes adjacents 3 respectivement de deux panneaux consécutifs 1 à raccorder et s'étendant parallèlement aux tubes 2. Comme représenté, deux organes de liaison 6 sont prévus de chaque côté des deux collecteurs transversaux adjacents 3 symétriquement au plan médian longitudinal commun aux deux panneaux consécutifs 1. Bien entendu, dans le cas d'un seul organe de liaison 6, celui-ci se trouvera au centre des deux collecteurs transversaux adjacents 3 suivant l'axe longitudinal des deux panneaux consécutifs 1.

Chaque organe de liaison 6 est réalisé à partir d'une lame métallique élastique ayant ses deux extrémités 6a recourbées de façon à épouser en partie, en position de montage, la circonférence des deux collecteurs transversaux adjacents 3 et à permettre leur accrochage tout en exerçant une force de rappel l'un vers l'autre des deux collecteurs 3.

Le dispositif de raccordement de deux panneaux successifs 1 comprend également deux manchons 7 permettant de raccorder en alignement respectivement deux paires de collecteurs longitudinaux 4 faisant partie respectivement des deux panneaux consécutifs 1.

La figure 3 représente plus en détail chaque manchon de raccordement 7 qui comprend une partie d'extrémité filetée extérieurement 7a permettant de solidariser le manchon 7 par vissage dans l'extrémité de l'un d'un collecteur longitudinal 4 d'un panneau 1 à raccorder à l'autre collecteur 4 de l'autre panneau 1 et une partie opposée 7b pouvant s'engager librement dans l'extrémité de l'autre collecteur longitudinal 4 des deux collecteurs à raccorder. Plus précisément, chacune des extrémités en vis-à-vis des deux collecteurs longitudinaux 4 à raccorder comprend une douille identique 8 engagée dans cette extrémité de façon solidaire au collecteur correspondant 4, par exemple par emmanchement à force, et comprenant un perçage d'entrée 8a dans lequel peut s'engager la partie 7b du manchon de raccordement 7 opposée à sa partie filetée 7a et un trou taraudé 8b en prolongement du perçage d'entrée 8a et dans lequel peut être vissée la partie filetée 7a du manchon de raccordement 7.

Le manchon 7 comprend en outre une collerette de forme héxagonale 7c qui, en position de raccordement des deux tubes longitudinaux alignés 4, fait saillie à l'extérieur de façon à pouvoir être manoeuvrée par un outil, tel qu'une clef plate.

Le manchon de raccordement 7 comprend enfin deux gorges 7d situées entre la collerette 7c et la partie filetée 7a et dans lesquelles sont engagés deux joints toriques d'étanchéité 9 s'écrasant, en position de raccordement des deux collecteurs longitudinaux 4, contre la surface circulaire correspondante du perçage d'entrée 8a de l'une des douilles 8. Le manchon 7 comprend également deux autres gorges 7d situées entre la collerette 7c et la partie d'extrémité 7b et destinée à recevoir deux joints toriques d'étanchéité 9 s'écrasant, en position de raccordement des deux collecteurs longitudinaux 4, contre la surface circulaire correspondante du perçage d'entrée 8a de l'autre douille 8. La figure 3 montre également qu'en position de raccordement alignée des deux collecteurs longitudinaux 4, les faces dressées en bout des deux douilles 8 sont en appui respectivement sur les deux faces latérales de la collerette 7c.

On comprend que le montage du manchon de raccordement 7 peut s'effectuer par vissage dans l'une ou l'autre des deux douilles internes 8 des deux collecteurs longitudinaux 4 à raccorder.

Bien entendu, le manchon de raccordement 7 et les douilles 8 sont percés axialement pour permettre le passage de l'eau chaude à travers les collecteurs longitudinaux alignés 4 des différents panneaux.

Le principe de raccordement de deux panneaux successifs 1 ressort déjà en partie de la description ci-dessus et va être maintenant expliqué.

L'opérateur accroche des ridoirs à double crochet 10 aux différentes pattes de support 5 pour permettre le soulèvement des panneaux racordés 1 au plafond d'un local à chauffer, les ridoirs étant raccordés en partie supérieure à des chaînes de suspension 11 solidaires du plafond.

Les deux panneaux 1 à raccorder en série sont posés horizontalement, de façon que leurs paires de collecteurs longitudinaux 4 soient en regard les uns des autres. Un opérateur introduit ensuite chaque manchon de raccordement 7 dans l'une correspondante des extrémités d'un collecteur 4 de façon à solidariser le manchon 7 par vissage dans la douille correspondante 8. Une fois les deux manchons vissés dans les deux collecteurs correspondants 4, l'opérateur rapproche l'un vers l'autre les deux panneaux 1 de façon à engager les parties d'extrémités 7b des manchons de raccordement 7 respectivement dans les deux extrémités correspondantes des deux autres collecteurs longitudinaux 4. Ensuite, l'opérateur engage par encliquetage les deux organes formant agrafe 6 sur les deux collecteurs transversaux adjacents 3 des deux panneaux 1 à la position de montage représentée en figure 3, lesquels organes 6, en rappelant élastiquement l'un vers l'autre les deux collecteurs transversaux 3, permettent le maintien de l'extrémité de la douille 8 opposée à la partie filetée 7a du manchon de raccordement 7 en appui sur la face correspondante de la collerette 7c.

L'opérateur, à l'aide d'une clef plate, peut régler la position relative de chaque manchon de raccordement 7 pour régler l'alignement des collecteurs longitudinaux 4 en rattrapant des décalages éventuels pouvant exister longitudinalement entre collecteurs longitudinaux à raccorder.

La figure 5 représente trois panneaux rayonnants 1 raccordés en série et permettant d'irriger les panneaux en effectuant l'entrée d'eau chaude à l'extrémité du collecteur longitudinal 4 du premier panneau 1 situé à gauche de la figure et représenté partiellement, le sens de circulation de l'eau chaude étant indiqué en F1 par les flèches en traits pleins et la sortie de l'eau chaude par l'extrémité opposée du collecteur longitudinal opposé du panneau de droite également représenté partiellement, le sens d'écoulement de retour de l'eau chaude étant indiqué par F2 et représenté par des flèches en pointillés. Pour permettre ce type d'irrigation des panneaux 1, le collecteur longitudinal du panneau de gauche d'où arrive l'eau chaude n'est pas en communication de fluide avec le collecteur transversal 3 de ce panneau opposé à l'entrée d'eau chaude tandis que le collecteur longitudinal 4 du panneau intermédiaire et qui est raccordé avec le collecteur longitudinal du premier panneau est en communication de fluide, par le perçage 4a, avec le collecteur transversal 3 de gauche du panneau intermédiaire 1. Le collecteur longitudinal 4 du premier panneau 1 opposé à celui d'entrée d'eau chaude est en communication de fluide, par le perçage 4a, avec le collecteur transversal 3 du premier panneau 1 opposé à l'entrée d'eau chaude tandis que le collecteur longitudinal du panneau intermédiaire 1 raccordé en prolongement du collecteur longitudinal du premier panneau n'est pas en communication de fluide avec le collecteur transversal 3 de gauche du panneau intermédiaire 1. Cet agencement de communication entre collecteurs longitudinaux 4 et collecteurs transversaux 3 se répète de façon identique pour le panneau intermédiaire 1 et le troisième panneau de droite 1.

Bien entendu, les différents panneaux rayonnants 1 peuvent être raccordés individuellement de façon à permettre l'entrée et la sortie d'eau chaude d'un même côté ou à l'opposé et peuvent être raccordés en série suivant un principe de distribution en boucle dite de "Tichelmann", comme cela est connu en soi.

En tout cas, le principe d'irrigation des différents panneaux raccordés en série les uns aux autres est tel qu'il permet un auto-équilibrage des pertes de charge.

L'invention ci-dessus décrite présente ainsi les avantages suivants :
- la simplification de l'assemblage les uns aux autres des panneaux rayonnants par rapport aux dispositifs de raccordement connus jusqu'à maintenant ;
- la standardisation des différentes pièces de raccordement constituées par les organes formant agrafe de liaison 6 et les manchons de raccordement 7 permet de les adapter à différents types d'installation des panneaux ;
- la possibilité de réaliser des séries de grande longueur de panneaux, alors que le raccordement de panneaux par les dispositifs antérieurement connus était limité à une longueur maximale de 9 mètres ;
- la diminution du nombre de purgeurs automatiques ou la suppression de ceux-ci, d'où des coûts réduits ;
- l'optimisation de la circulation du fluide caloporteur et de la puissance des panneaux rayonnants ;
- le principe d'irrigation permettant un auto-équilibrage des panneaux ;
- la réduction des résistances internes grâce aux collecteurs supplémentaires ;
- l'amélioration de la rigidité des panneaux ;
- la réduction de l'encombrement ;
- l'alignement des panneaux extrêmement simplifié et réglable ; et
- la possibilité de livraison des panneaux sur palettes.

## Revendications

1. Système comprenant au moins deux panneaux de chauffage par rayonnement (1) à circulation d'un fluide caloporteur, tel que de l'eau chaude, et un dispositif permettant de raccorder en série les deux panneaux de chauffage, chaque panneau (1) comprenant des tubes plats parallèles rayonnants (2) situés dans un même plan et deux collecteurs cylindriques (3) fixés en arrière des tubes plats (2) respectivement aux extrémités opposées des tubes plats (2) transversalement à ceux-ci en étant en communication de fluide avec les tubes plats (2) pour assurer la circulation du fluide caloporteur, **caractérisé en ce qu'**il comprend au moins un organe (6) formant agrafe de liaison par accrochage des deux collecteurs transversaux extrêmes adjacents (3) respectivement des deux panneaux (1) et deux manchons (7) permettant de raccorder en alignement respectivement deux paires de collecteurs cylindriques longitudinaux (4) fixés sur les collecteurs transversaux (3) des deux panneaux (1) au voisinage de leurs extrémités en étant en communication de fluide avec au moins un des collecteurs transversaux (3).

2. Système selon la revendication 1, **caractérisé en ce qu'**il comprend deux organes formant agrafe de liaison (6) s'étendant parallèlement aux tubes plats (2) et situés symétriquement au plan médian longitudinal des panneaux raccordés (1).

3. Système selon la revendication 1 ou 2, **caractérisé en ce que** chaque manchon de raccordement (7) comprend une partie d'extrémité filetée extérieurement (7a) permettant de solidariser le manchon (7) par vissage dans un trou taraudé (8a) réalisé dans l'une des extrémités d'un collecteur longitudinal (4) d'une paire de collecteurs longitudinaux (4) à raccorder et une partie opposée (7b) pouvant s'engager librement dans l'extrémité de l'autre collecteur longitudinal (4) de ladite paire de collecteurs longitudinaux (4), la partie opposée (7b) du manchon (7) étant maintenue dans l'extrémité de l'autre collecteur longitudinal (4) par la force de rappel l'un vers l'autre des deux collecteurs transversaux (3) exercée par chaque organe formant agrafe de liaison (6).

4. Système selon la revendication 3, **caractérisé en ce que** chacune des extrémités en vis-à-vis des deux collecteurs longitudinaux à raccorder (4) comprend une douille interne fixe (8) comportant un alésage d'entrée (8a) pouvant recevoir la partie (7b) du manchon (7) opposée à sa partie filetée (7a) et un trou taraudé (8b) en prolongement de l'alésage d'entrée (8a) et dans lequel peut être vissée la partie filetée (7a) du manchon de raccordement (7).

5. Système selon la revendication 3 ou 4, **caractérisé en ce que** le manchon de raccordement (7) comprend une collerette de forme héxagonale (7c) située entre les deux extrémités des deux collecteurs longitudinaux correspondants raccordés (4) et faisant saillie à l'extérieur de façon à être manoeuvrable par un outil, tel qu'une clef plate, pour régler l'alignement des collecteurs longitudinaux (4).

6. Système selon l'une des revendications 3 à 5, **caractérisé en ce que** le manchon de raccordement (7) comprend en outre des gorges (7d) de réception de joints toriques d'étanchéité (9) au fluide.

7. Système selon l'une des revendications précédentes, **caractérisé en ce que** chaque manchon de raccordement (7) est percé axialement pour le passage du fluide caloporteur à travers la paire correspondante de collecteurs longitudinaux raccordés (4).

8. Système selon l'une des revendications précédentes, **caractérisé en ce que** les collecteurs longitudinaux (4) des panneaux (1) sont fixés aux collecteurs transversaux (3) par soudage et la communication de fluide entre les collecteurs longitudinaux (4) et transversaux (3) s'effectue par des perçages (4a, 3b) réalisés dans les zones de contact entre ces collecteurs.

9. Système selon l'une des revendications précédentes, **caractérisé en ce que** la communication de fluide entre les collecteurs transversaux (3) et les tubes plats (2) s'effectue par des perçages (3a, 2a) réalisés dans les zones de contact entre collecteurs (3) et tubes plats (2).

10. Système selon l'une des revendications précédentes, **caractérisé en ce que** chaque panneau (1) comprend des pattes (5) solidaires des tubes plats (2) et permettant la fixation du panneau (1) au plafond d'un local par l'intermédiaire de chaînes (11) et de ridoirs (10) à double crochet fixés aux pattes de fixation (5).

11. Panneau de chauffage par rayonnement (1) à circulation d'un fluide caloporteur, tel que de l'eau chaude, comprenant des tubes plats parallèles rayonnants (2) situés dans un même plan et deux collecteurs cylindriques (3) fixés en arrière des tubes plats (2) respectivement aux extrémités opposées des tubes plats (2) transversalement à ceux-ci en étant en communication de fluide avec les tubes plats (2) pour assurer la circulation du fluide caloporteur, **caractérisé en ce qu'**il comprend deux autres collecteurs cylindriques longitudinaux (4) s'étendant parallèlement aux tubes plats (2) et qui sont fixés sur les deux collecteurs transversaux (3) en étant en communication de fluide avec ces derniers pour assurer la circulation du fluide caloporteur de façon prédéterminée, chacun des collecteurs longitudinaux (4) comprenant à au moins l'une de ses extrémités une douille interne (8) solidaire de cette extrémité et adaptée pour recevoir dans son alésage d'entrée (8a) un manchon de raccordement (7) du dispositif de raccordement ledit dispositif de raccordement comprenant au moins un organe (6) formant agrafe de liaison par accrochage des deux collecteurs transversaux extrêmes adjacents (3) respectivement des deux panneaux (1) et deux manchons (7) permettant de raccorder en alignement respectivement deux paires de collecteur cylindriques longitudinaux (4) fixés sur les collecteurs transversaux (3) des deux panneaux (1) au voisinage de leurs extrémités en étant en communication de fluide avec au moins un des collecteurs transversaux.

12. Panneau selon la revendication 11, **caractérisé en ce que** les collecteurs longitudinaux (4) sont fixés aux collecteurs transversaux (3) par soudage et communiquent ensemble par des perçages (4a, 3b) réalisés dans les zones de contact entre collecteurs.

13. Panneau selon la revendication 11 ou 12, **caractérisé en ce que** les collecteurs transversaux (3) sont fixés aux tubes plats (2) par soudage et communiquent avec ces derniers par des perçages (3a, 2a) réalisés dans les zones de contact entre collecteurs (3) et tubes plats (2).

14. Panneau selon l'une des revendications 11 à 13, **caractérisé en ce qu'**il comprend des pattes (5) solidaires des tubes plats (2) et permettant la fixation du panneau (1) au plafond d'un local par l'intermédiaire de chaînes (11) et de ridoirs (10) à double crochet fixés aux pattes de fixation (5).

## Patentansprüche

1. Einrichtung mit zumindest zwei Strahlungsheizpaneelen (1) mit Umwälzung eines Wärmeträgermediums, wie etwa heißes Wasser, und einer Vorrichtung, um die beiden Heizpaneele in Reihe zu verbinden, wobei jedes Paneel (1) parallel verlaufende Strahlungsflachrohre (2) enthält, die in einer gleichen Ebene liegen, sowie zwei zylindrische Kollektoren (3), die hinter den Flachrohren (2) an den jeweiligen entgegengesetzten Enden der Flachrohre (2) quer zu diesen befestigt sind, indem sie mit den Flachrohren (2) in fluldischer Verbindung stehen, um das Umwälzen des Wärmeträgermediums zu gewährleisten, **dadurch gekennzeichnet, dass** sie zumindest ein Organ (6) enthält, das eine Klammer zum Verbinden durch Verhaken der beiden quer verlaufenden aneinandergrenzenden Endkollektoren (3) der beiden jeweiligen Paneele (1) bildet, sowie zwei Muffen (7), die gestatten, zwei Paare von längs verlaufenden zylindrischen Kollektoren (4) jeweils fluchtend zu verbinden, die an den quer verlaufenden Kollektoren (3) der beiden Paneele (1) benachbart zu ihren Endabschnitten befestigt sind, indem sie mit zumindest einem der quer verlaufenden Kollektoren (3) in fluidischer Verbindung stehen.

2. Einrichtung nach Anspruch 1, **dadurch gekennzeichnet, dass** sie zwei Verbindungsklammem bildende Organe (6) enthält, die sich parallel zu den Flachrohren (2) erstrecken und symmetrisch zu der Längsmittelebene der verbundenen Paneele (1) liegen.

3. Einrichtung nach Anspruch 1 oder 2, **dadurch gekennzeichnet, dass** jede Verbindungsmuffe (7) einen Endabschnitt mit Außengewinde (7a) enthält, der es ermöglicht, die Muffe (7) durch Einschrauben in eine Gewindebohrung (8a) zu befestigen, die in einem der Enden eines längs verlaufenden Kollektors (4) eines Paares von zu verbindenden längs verlaufenden Kollektoren (4) ausgeführt ist, sowie einen entgegengesetzten Abschnitt (7b), der in das Ende des anderen längs verlaufenden Kollektors (4) des genannten Paares von längs verlaufenden Kollektoren (4) frei eingreifen kann, wobei der entgegengesetzte Abschnitt (7b) der Muffe (7) in dem Ende des anderen längs verlaufenden Kollektors (4) durch die gegenseitige Rückstellkraft der beiden quer verlaufenden Kollektoren (3) gehalten wird, die von jedem Verbindungsklammerorgan (6) ausgeübt wird.

4. Einrichtung nach Anspruch 3, **dadurch gekennzeichnet, dass** jedes der gegenüberliegenden Enden der beiden zu verbindenden längs verlaufenden Kollektoren (4) eine feste Innenhülse (8) enthält, die eine Eintrittsbohrung (8a) enthält, welche den Abschnitt (7b) der Muffe (7) aufnehmen kann, der ihrem Gewindeabschnitt (7a) entgegengesetzt ist, sowie eine Gewindebohrung (8b), die in Verlängerung der Elntrfttsbohrung (8a) liegt und in weiche der Gewindeabschnitt (7a) der Verbindungsmuffe (7) eingeschraubt werden kann.

5. Einrichtung nach Anspruch 3 oder 4. **dadurch gekennzeichnet, dass** die Verbindungsmuffe (7) einen sechseckförmigen Bund (7c) enthält, der zwischen den beiden Endabschnitten der beiden entsprechend verbundenen längs verlaufenden Kollektoren (4) liegt und so nach außen vorsteht, dass er mit einem Werkzeug betätigbar ist, wie etwa einem Maulschlüssel, um die Ausrichtung der längs verlaufenden Kollektoren (4) einzustellen.

6. Einrichtung nach einem der Ansprüche 3 bis 5, **dadurch gekennzeichnet, dass** die Verbindungsmuffe (7) femer Nuten (7d) zum Aufnehmen von O-Ringen (9) zum Abdichten gegen das Medium enthält.

7. Einrichtung nach einem der vorangehenden Ansprüche, **dadurch gekennzeichnet, dass** jede Verbindungsmuffe (7) axial durchbohrt ist für den Durchtritt des Wärmeträgermediums durch das entsprechende Paar von verbundenen längs verlaufenden Kollektoren (4).

8. Einrichtung nach einem der vorangehenden Ansprüche, **dadurch gekennzeichnet, dass** die längs verlaufenden Kollektoren (4) der Paneele (1) an den quer verlaufenden Kollektoren (3) festgeschweißt sind und die fluidische Verbindung zwischen den längs verlaufenden Kollektoren (4) und den quer verlaufenden Kollektoren (3) über Bohrungen (4a, 3b) erfolgt, die in den Kontaktbereichen zwischen diesen Kollektoren ausgeführt sind.

9. Einrichtung nach einem der vorangehenden Ansprüche, **dadurch gekennzeichnet, dass** die fluidische Verbindung zwischen den quer verlaufenden Kollektoren (3) und den Flachrohren (2) über Bohrungen (3a, 2a) erfolgt, die in den Kontaktbereichen zwischen den Kollektoren (3) und den Flachrohren (2) ausgeführt sind.

10. Einrichtung nach einem der vorangehenden Ansprüche, **dadurch gekennzeichnet, dass** jedes Paneel (1) Laschen (5) enthält, die fest mit den Flachrohren (2) verbunden sind und die Befestigung des Paneels (1) an der Decke eines Raums mittels Ketten (11) und Spannschlösser (10) mit Doppelhaken ermöglichen, die an den Befestigungslaschen (5) befestigt sind.

11. Strahlungsheizpaneel (1) mit Umwälzung eines Wärmeträgermedlums, wie etwa heißes Wasser, mit parallel verlaufenden Strahlungsflachrohren (2), die in einer gleichen Ebene liegen, sowie mit zwei zylindrischen Kollektoren (3), die hinter den Flachrohren (2) an den jeweiligen entgegengesetzten Enden der Flachrohre (2) quer zu diesen befestigt sind, indem sie mit den Flachrohren (2) in fluidischer Verbindung stehen, um das Umwälzen des Wärmeträgermediums zu gewährleisten, **dadurch gekennzeichnet, dass** es zwei weitere längs verlaufende zylindrische Kollektoren (4) enthält, die parallel zu den Flachrohren (2) verlaufen und an den beiden quer verlaufenden Kollektoren (3) befestigt sind, indem sie mit letzteren in fluidischer Verbindung stehen, um die Umwälzung des Wärmeträgermediums in vorbestimmter Weise zu gewährieisten, wobei jeder der längs verlaufenden Kollektoren (4) an zumindest einem seiner Enden eine Innenhülse (8) enthält, die fest mit diesem Ende verbunden und darauf abgestimmt ist, in ihrer Eintrittsbohrung (8a) eine Verbindungsmuffe (7) der Verbindungsvorrichtung aufzunehmen, wobei die Verbindungsvorrichtung zumindest ein Organ (6) enthält, das eine Klammer zum Verbinden durch Verhaken der beiden quer verlaufenden aneinandergrenzenden Endkollektoren (3) der beiden jeweiligen Paneele (1) bildet, sowie zwei Muffen (7), die gestatten, zwei Paare von längs verlaufenden zylindrischen Kollektoren (4) jeweils fluchtend zu verbinden, die an den quer verlaufenden Kollektoren (3) der beiden Paneele (1) benachbart zu ihren Endabschnitten befestigt sind, indem sie mit zumindest einem der quer verlaufenden Kollektoren (3) in fluidischer Verbindung stehen.

12. Paneel nach Anspruch 11, **dadurch gekennzeichnet, dass** die längs verlaufenden Kollektoren (4) an den quer verlaufenden Kollektoren (3) festgeschweißt sind und über Bohrungen (4a, 3b) miteinander in Verbindung stehen, die in den Kontaktbereichen zwischen den Kollektoren ausgeführt sind.

13. Paneel nach Anspruch 11 oder 12, **dadurch gekennzeichnet, dass** die quer verlaufenden Kollektoren (3) an den Flachrohren (2) festgeschweißt sind und mit den letztgenannten über Bohrungen (3a, 2a) in Verbindung stehen, die in den Kontaktbereichen zwischen den Kollektoren (3) und den Flachrohren (2) ausgeführt sind.

14. Paneel nach einem der Ansprüche 11 bis 13, **dadurch gekennzeichnet, dass** es Laschen (5) enthält, die fest mit den Flachrohren (2) verbunden sind und die Befestigung des Paneels (1) an der Decke eines Raums mittels Ketten (11) und Spannschlösser (10) mit Doppelhaken ermöglichen, die an den Befestigungslaschen (5) befestigt sind.

## Claims

1. System including at least two radiant heating panels (1) in which a heat transfer fluid such as hot water circulates, and a device enabling the two heating panels to be connected in series, each panel (1) including flat parallel radiant tubes (2) situated in the same plane and two cylindrical headers (3) fixed at the rear of the flat tubes (2) respectively at the opposite extremities of the flat tubes (2) transversely to the latter and being in fluid communication with the flat tubes (2) in order to effect the circulation of the heat transfer fluid, **characterised in that** it includes at least one component (6) forming a clip fastener holding the two adjacent endmost transverse headers (3) respectively of the two panels (1) and two connecting sleeves (7) enabling the joining in alignment respectively of two pairs of longitudinal cylindrical headers (1) fixed to the transverse headers (3) of the two panels (1 ) in proximity to their extremities and in fluid communication with at least one of the transverse headers (3).

2. System according to claim 1, **characterised in that** it includes two components forming a clip fastener (6) extending parallel to the flat tubes (2) and situated symmetrically in the median longitudinal plane of the connected panels (1).

3. System according to claim 1 or 2, **characterised in that** each connecting sleeve (7) includes an externally threaded part at its extremity (7a) enabling the connecting sleeve (7) to be joined by screwing into a threaded hole (8a) produced in one of the extremities of one longitudinal header (4) of a pair of longitudinal headers (4) to be joined together and an opposite part (7b) capable of filing freely into the extremity of the other longitudinal header (4) of said pair of longitudinal headers (4), the opposite part (7b) of the connecting sleeve (7) being held in the extremity of the other longitudinal header (4) by the restoring force against each other of the two transverse headers (3) exerted by each component forming a clip fastener (6).

4. System according to claim 3, **characterised in that** each of the facing extremities of the two longitudinal headers to be connected (4) includes a fixed internal socket (8) with an inlet bore (8a) able to receive the part (7b) of the connecting sleeve (7) opposite to its threaded part (7a) and a threaded hole (8b) in extension of the inlet bore (8a) and into which the threaded part (7a) of the connecting sleeve (7) can be screwed.

5. System according to claim 3 or 4, **characterised in that** the connecting sleeve (7) includes a hexagonal collar (7c) situated between the two extremities of the two corresponding connected longitudinal headers (4) and projecting on the exterior in such a way as to be manoeuvrable by a tool, such as an open end spanner, in order to adjust the alignment of the longitudinal headers (4).

6. System according to one of claims 3 to 5, **characterised in that** the connecting sleeve (7) also includes grooves (7d) to receive fluid-tight O-ring joints.

7. System according to one of the preceding claims, **characterised in that** each connecting sleeve (7) is pierced axially for the passage of the heat transfer fluid along the corresponding pair of connected longitudinal headers (4).

8. System according to one of the preceding claims, **characterised in that** the longitudinal headers (4) of the panels (1) are fixed to the transverse headers (3) by welding and the communication of fluid between the longitudinal headers (4) and the transverse headers (3) is effected by means of openings (4a, 3b) made in the areas of contact between these headers.

9. System according to one of the preceding claims, **characterised in that** the communication of fluid between the transverse headers (3) and the flat tubes (2) is effected by means of openings (3a, 2a) made in the areas of contact between headers (3) and flat tubes (2).

10. System according to one of the preceding claims, **characterised in that** each panel (1) includes lugs (5) integral with the flat tubes (2) and enabling the panel (1) to be fixed to the ceiling of a building by means of chains (11) and double-hook turnbuckles (10) fixed to the lugs (5).

11. Radiant heating panel (1) in which a heat transfer fluid such as hot water circulates, including flat parallel radiant tubes (2) situated in the same plane and two cylindrical headers (3) fixed at the rear of the flat tubes (2) respectively at the opposite extremities of the flat tubes (2) transversely to the latter and in fluid communication with the flat tubes (2) in order to effect the circulation of the heat transfer fluid, **characterised in that** it includes two other longitudinal cylindrical headers (4) which extend parallel to the flat tubes (2) and are fixed to the two transverse headers (3) being in fluid communication with the latter in order to effect the circulation of the heat transfer fluid in a predetermined fashion, each of the longitudinal headers (4) including on at least one of its extremities an internal socket (8) integral with this extremity and adapted to receive in its inlet bore (8a) a connecting sleeve (7) of the connecting device, said connecting device including at least one component (6) forming a clip fastener holding the two adjacent endmost transverse headers (3) respectively of the two panels (1) and two connecting sleeves (7) enabling the joining in alignment respectively of two pairs of longitudinal cylindrical headers (4) fixed to the transverse headers (3) of the two panels (1) in proximity to their extremities and in fluid communication with at least one of the transverse headers (3).

12. Panel according to claim 11, **characterised in that** the longitudinal headers (4) are fixed to the transverse headers (3) by welding and communicate with one another by perforations (4a, 3b) made in the areas of contact between [the] headers.

13. Panel according to claim 11 or 12, **characterised in that** the transverse headers (3) are fixed to the flat tubes (2) by welding and communicate with the latter by means of perforations (3a, 2a) made in the areas of contact between headers (3) and flat tubes (2).

14. Panel according to one of claims 11 to 13, **characterised in that** it includes lugs (5) integral with the flat tubes (2) and enabling the panel (1) to be fixed to the ceiling of a building by means of chains (11) and double-hook turnbuckles (10) fixed to the lugs (5).
